# FASCICULE DE BREVET EUROPEEN

(11) **EP 2 200 810 B1**
(45) Date de publication et mention de la délivrance du brevet: **25.03.2015**
(21) Numéro de dépôt: 08843237.2
(22) Date de dépôt: 09.10.2008
(51) Int. Cl.: B29C 49/64, B65B 3/04, B65B 53/06, B67C 3/22, B65B 3/02

(54) **PROCEDE DE FABRICATION D'UN CONTENANT A PAROI MINCE, PROCEDE DE MISE EN PRESSION DE CE CONTENANT**
VERFAHREN ZUR HERSTELLUNG EINES DÜNNWANDIGEN BEHÄLTERS UND VERFAHREN ZUR UNTERDRUCKSETZUNG DES BEHÄLTERS
METHOD FOR PRODUCING A THIN-WALLED CONTAINER AND CONTAINER PRESSURISATION METHOD

(30) Priorité: 10.10.2007 FR 0758185
(43) Date de publication de la demande: 30.06.2010
(73) Titulaire: Plastipak Packaging, Inc., Plymouth, MI 48170 (US)
(72) Inventeur: OUTREMAN, Jean-Tristan, 83470 Saint-Maximin-la-Sainte-Baume (FR)
(74) Mandataire: Arat, Dogan
(86) Numéro de dépôt international: PCT/FR2008/051826
(87) Numéro de publication internationale: WO 2009/053616

(56) Documents cités:
- EP-A- 1 468 930
- WO-A-2006/039523
- FR-A- 2 772 365
- FR-A- 2 887 238
- US-A- 5 281 387
- US-A1- 2007 090 083

## Description

La présente invention concerne un procédé de fabrication d'un contenant à paroi mince et le procédé de mise en pression de ce contenant plein.

Dans le domaine de l'agroalimentaire, notamment celui des boissons, il est un problème particulier, celui des contenants de grand volume, à paroi mince.

Les contenants à paroi mince sont connus par exemple dans les demandes de brevet WO-03/033361, EP-1468930 et EP-1527999, US 5,281,387 et FR 2 887 238 A.

Ces contenants sont très attractifs pour les petits volumes inférieurs à 2 litres car au-delà, les produits réalisés selon l'enseignement de ces brevets sont relativement lourds du fait que la quantité de matière est liée au paramètre du volume de ces contenants.

L'augmentation de la surface d'un emballage n'est pas proportionnelle à celle du volume dudit emballage. Donc pour des volumes supérieurs à 2 litres, il est tout à fait possible de réduire les poids des emballages tout en garantissant une bonne tenue mécanique après conditionnement.

De plus, ces contenants présentent la nécessité d'une mise en pression du volume intérieur qui ne donne pas satisfaction comme explicité ci-après.

De plus, pour des raisons économiques que l'on comprend aisément, le but est de diminuer la quantité de matière nécessaire pour la réalisation de ces contenants à paroi mince, ceci tant pour réduire les coûts de production que pour réduire les coûts de recyclage, ce que l'art antérieur ne permet pas puisque dès que les volumes deviennent supérieurs à 2 litres notamment, le poids de matière augmente de façon très importante puisqu'elle est liée au volume donc un facteur cubique.

Ces contenants sont à usage unique et il serait intéressant d'éviter une sophistication inutile pour l'usage qui en est fait d' où l' intérêt accru pour les contenants à paroi mince mais avec un procédé de fabrication identique autorisant une gamme allant des petits contenants de quelques centilitres jusqu'aux grands volumes de une à plusieurs dizaines de litres en évitant une augmentation trop importante du poids de matière.

En plus du problème de réduction de la quantité de matière, on peut mentionner un autre problème, celui de la rigidité, qui diminue de façon proportionnelle à la quantité de matière.

Pour ces contenants fabriqués par le procédé selon l'invention, avec une quantité réduite de matière, la rigidité du contenant obtenu est insuffisante.

Cette rigidité est insuffisante pour permettre une bonne préhension avant ouverture et surtout cette faible rigidité rend difficile voire impossible une superposition de ces contenants pleins, notamment lorsqu'ils sont palettisés et que les palettes sont gerbées les unes sur les autres.

De plus, la rigidité d'un tel contenant à paroi mince pose un autre problème car ces contenants sont conditionnés à température ambiante et lorsque ces contenants sont placés en ambiance froide, il se produit un phénomène de collapse qui engendre des déformations du contenant et une mauvaise tenue lors de la préhension.

Généralement, les contenants à parois minces sont emplis à froid avec des liquides plats tels que l'eau minérale, l'huile, les jus de fruits, le lait.

Ensuite, pour répondre à la nécessité de rigidité, il est prévu de mettre ces contenants à parois minces sous pression interne en recourant notamment au procédé dit de la goutte d'azote qui est couramment utilisé industriellement ou à tout autre procédé analogue.

Ce procédé de la goutte d'azote pris comme exemple, consiste à introduire dans le contenant empli du liquide à conditionner, une goutte d'azote liquide, immédiatement avant bouchage, dans l'espace de tête du contenant. Immédiatement après bouchage, cette goutte d'azote liquide se transforme en gaz. L'augmentation de volume dans l'espace de tête conduit à une montée en pression de l' intérieur du contenant et donc à une rigidification dudit contenant. Cette amélioration de pression reste néanmoins relativement faible de l'ordre du dixième de bar.

Cependant, ce procédé de la goutte d'azote pose un certain nombre de problèmes.

D'abord le dosage du volume introduit est difficile, or la pression finale dépend de la quantité introduite, des conditions de travail et du délai de bouchage.

Ensuite, les moyens de distribution de cette goutte d'azote doivent être intégrés dans la chaîne et, de ce fait, ils doivent donc être adaptés. De plus, lorsque le conditionnement est réalisé par voie aseptique, cette adaptation est une contrainte forte : nécessités de nettoyage, de stérilisation, de maintenance. Un poste supplémentaire implique une source supplémentaire de panne avec arrêt d'une chaîne. Dans le cas d'une chaîne de conditionnement aseptique, cette intervention s'avère encore plus délicate car les interventions sont difficiles et longues puisqu'il faut remettre l'ensemble aux conditions de conditionnement aseptique.

De plus, on constate que l'azote liquide, à une température fortement négative, tombe dans le liquide à température ambiante si bien que la tombée de goutte provoque régulièrement des éclaboussures sur les bords du contenant.

Ces éclaboussures du fluide contenu tel que eau minérale, jus de fruit, huile peuvent se dégrader après conditionnement, durant le stockage conduisant au développement de moisissures avant que le produit ne soit commercialisé et donc avant que le produit ne soit consommé, ce qui n'est pas satisfaisant.

Le matériau utilisé pour la fabrication des contenants à parois minces est souvent du PET, Polyéthylène Téréphtalate, connu pour sa transparence, son faible poids et ses grandes possibilités de conformation. Le PET autorise aussi une bonne conservation des liquides contenus.

La présente invention propose un procédé de fabrication d'un contenant à paroi mince, ainsi qu'un procédé de mise en pression dudit contenant empli à froid et contenant un liquide plat afin d'améliorer la rigidité dudit contenant avant ouverture, procédé qui pallie les problèmes évoqués ci-avant. Le procédé Selon l'invention est défini dans la revendication 1.

Selon l'invention, le procédé de fabrication d'un contenant à paroi mince consiste à réaliser ledit contenant à paroi mince avec un ratio poids de matière/surface de paroi de l'ordre de 150 g/m² à 250 g/m² voire de 150 g/m² à 200 g/m².

Le poids de col de l'emballage est exclu de ce ratio. Le col de l'emballage est défini par la matière qui ne subit aucune déformation lors de la fabrication dudit emballage.

Dans le cas présent, le contenant à paroi mince est du type fabriqué de façon connue par soufflage longitudinal et radial, à partir d'une préforme.

Ce contenant présente le volume nécessaire et recherché et il est fabriqué en PET.

Par contre il subsiste des contraintes résiduelles de fabrication. En effet, dans le cas du PET, notamment, une fois que la préforme est soufflée, le contenant est refroidi très rapidement dans les moules. La forme obtenue et les contraintes liées à la déformation sont figées par cet abaissement de température.

En effet, durant le soufflage les contraintes s'exercent dans deux sens, longitudinal et radial, d' où le nom de contenant en PET bi-orienté, donné aux contenants ainsi obtenus.

C'est ce figeage à une température inférieure à la température de transition vitreuse qui assure au contenant la conservation de la forme.

Le procédé de mise en pression, selon la présente invention, d'un contenant à paroi mince obtenu selon le procédé précédent, destiné à contenir un liquide plat consiste en la succession des étapes suivantes :
- réalisation d'un contenant selon le procédé précédent,
- emplissage à froid du contenant à paroi mince, présentant des contraintes résiduelles, avec ledit liquide plat,
- bouchage du contenant après emplissage, et
- chauffage de la paroi du contenant, sans élévation de température du liquide, pour atteindre le point de température de relâchement desdites contraintes résiduelles de façon à générer une diminution de volume du contenant et donc une mise en pression dudit contenant.

Cette dernière étape dite de chauffage de la paroi vise à ne chauffer que la paroi prise dans son épaisseur. Cet apport de chaleur provoque le relâchement des contraintes qui avaient été figées par le refroidissement rapide après déformation en fabrication.

Dans le cas d'un contenant en PET soufflé, les contraintes résiduelles sont bi-orientées. Le contenant a donc tendance à reprendre sa forme initiale, c'est-à-dire celle de la préforme.

Du fait de cette tendance à une réduction volumique, l'intérieur du contenant est mis sous pression et comme le liquide est incompressible, l'espace de tête se comprime jusqu'à un équilibre entre la pression exercée par la paroi et la pression intérieure.

La pression intérieure ainsi générée reste inférieure à 1 bar mais cette pression se trouve être tout à fait suffisante pour améliorer considérablement la rigidité du contenant empli et bouché, avant son premier débouchage.

Un tel chauffage peut être réalisé au moyen d'une projection d'air chaud sur la périphérie du contenant pendant une courte durée. Il convient d'atteindre le point de température provoquant le relâchement des contraintes dans le matériau, point connu aussi sous le nom de point de transition vitreuse.

L'apport d'énergie calorifique doit être important sur une durée très courte.

Ainsi, le PET qui est mauvais conducteur de la chaleur, absorbe les calories apportées par l'air chaud, ce qui conduit à un relâchement rapide des contraintes et évite la transmission des calories au liquide ou du moins rend totalement négligeable la quantité de calories transmises.

En effet, en cas de chauffage et de montée en température de la masse liquide contenue, on sait que cela provoque, au refroidissement, une diminution du volume de l'espace de tête qui se traduit par un collapse de la bouteille. En effet, la pression intérieure diminue tandis que le contenant a vu son volume figé puisque le relâchement des contraintes s'est également figé avec l'abaissement de la température sous le point de transition vitreuse.

La mise en pression intérieure selon le procédé de la présente invention permet aussi de compenser la diminution de pression, faible mais susceptible d'exister, liée à la perte d'une partie du liquide du fait de la perméabilité des parois, ces parois étant très minces.

La mise en pression de l'intérieur du contenant permet aussi de compenser le collapse lié à une diminution de température entre la température de conditionnement et la température de stockage, avant ouverture.

Le procédé ainsi utilisé est extrêmement industrialisable avec des coûts très limités, des risques de panne très réduits, une reproductibilité tout à fait satisfaisante puisqu'elle est auto régulée.

Surtout, le traitement de rigidification par la chaleur est conduit à l'extérieur de la chaîne, à savoir lorsque le contenant est bouché, ce qui est un gain considérable par suppression d'une opération à l'intérieur de l'enceinte aseptique lorsque le conditionnement est réalisé par voie aseptique.

Les contenants à parois minces ainsi réalisés, ayant des épaisseurs de parois telles que le ratio poids de matière/surface est compris entre 150 g/m² et 250 g/m² plus particulièrement 150 g/m² et 200 g/m², peuvent résister à des charges importantes du fait de leur rigidité fortement améliorée, notamment de tels contenants peuvent être palettisés et les palettes peuvent être elles-mêmes gerbées.

On note aussi que du point de vue sanitaire, la garantie de la conservation des qualités conférées au liquide durant l'embouteillage ne peut être contestée puisque l'opération de chauffage est extérieure à la chaîne d'embouteillage et s'effectue sur un contenant fermée. On mesure l'intérêt de cette opération extérieure lorsqu'il s'agit d'une chaîne travaillant en milieu aseptique.

On supprime même une source éventuelle de contamination puisque le poste permettant la mise sous pression de l'intérieur du contenant est retirée de la zone travaillant en milieu aseptique.

Le chauffage dont il est indiqué qu'un mode de réalisation préférentiel est celui de l'air chaud peut aussi faire appel à tout autre type de chauffage permettant une élévation rapide de la température de la paroi sans influencer de façon notable la température du contenu, par exemple un chauffage par infrarouges. De même le matériau concerné est le PET car il est actuellement le plus utilisé mais tout matériau adapté pour réaliser un contenant, susceptible de présenter des contraintes résiduelles, venues de déformation, est concerné par la présente invention.

## Revendications

1. Procédé de fabrication, de remplissage et de mise en pression d'un contenant en matière plastique et à paroi mince avec un ratio poids de matière/surface de paroi de l'ordre de 150 g/m² à 250 g/m², destiné à contenir un liquide plat, le procédé comportant les étapes suivantes :
- réalisation du contenant,
- emplissage à froid du contenant qui a des contraintes résiduelles, avec ledit liquide plat,
- bouchage du contenant après emplissage, et
- chauffage de la paroi du contenant, sans élévation de température du liquide, pour atteindre la température du point de transition vitreuse du contenant et pour atteindre le point de température de relâchement desdites contraintes résiduelles de façon à générer une pressurisation de l'intérieur dudit contenant.

2. Procédé selon la revendication 1, **caractérisé en ce qu'**il consiste à déformer une préforme en utilisant un ratio poids de matière/surface de paroi de l'ordre de 150 g/m² à 200 g/m².

3. Procédé selon la revendication 1 ou 2, **caractérisé en ce que** la déformation de la préforme est effectuée par soufflage.

4. Procédé selon la revendication 3, **caractérisé en ce que** le soufflage est exercé dans deux sens, longitudinal et radial de façon à obtenir un contenant bi-orienté.

5. Procédé selon l'une quelconque des revendications précédentes, **caractérisé en ce qu'**il consiste à utiliser du PET, Polyéthylène Téréphtalate.

## Patentansprüche

1. Verfahren zum Herstellen, Füllen und Unterdrucksetzen eines Behälters aus einem Plastikmaterial und mit einer dünnen Wand mit einem Gewichtsverhältnis von Masse zu Wandoberfläche in der Größenordnung von 150 g/m2 bis 250 g/m2, zum Aufnehmen einer stillen Flüssigkeit, wobei das Verfahren die folgenden Schritte beinhaltet:
- Herstellen des Behälters,
- Kaltbefüllen des unter Restspannung stehenden Behälters mit der stillen Flüssigkeit,
- Verschließen des Behälters nach dem Befüllen, und
- Erhitzen der Wand des Behälters, ohne die Temperatur der Flüssigkeit zu erhöhen, bis auf die Glasübergangstemperatur des Behälters und bis auf die Temperatur des Lösens der Restspannung, um das Behälterinnere unter Druck zu setzen.

2. Verfahren nach Anspruch 1, **dadurch gekennzeichnet, dass** es das Verformen eines Vorformlings unter Nutzung eines Gewichtsverhältnisses von Masse zu Wandoberfläche in der Größenordnung von 150 g/m2 bis 200 g/m2 beinhaltet.

3. Verfahren nach Anspruch 1 oder 2, **dadurch gekennzeichnet, dass** die Verformung des Vorformlings durch Blasen erzielt wird.

4. Verfahren nach Anspruch 3, **dadurch gekennzeichnet, dass** das Blasen in zwei Richtungen erfolgt, longitudinal und radial, um einen biaxial orientierten Behälter zu erhalten.

5. Verfahren nach einem der vorherigen Ansprüche, **dadurch gekennzeichnet, dass** es die Verwendung von Polyethylenterephtalat, PET, beinhaltet.

## Claims

1. A method for producing, filling and pressurizing a thin-walled plastic container with a material weight/wall surface ratio in the range of 150 g/m2 to 250 g/m2, aimed at containing a flat liquid, the method including the following steps:
- producing the container,
- cold-filling the container, which has residual stresses, with said flat liquid,
- sealing the container after filling, and
- heating the wall of the container, without rise in temperature of the liquid, in order to reach the temperature of the glass transition point of the container and to reach the temperature of release of said residual stresses so as to generate a pressurizing of the interior of said container.

2. A method according to claim 1, wherein it consists in deforming a preform using a material weight/wall surface ratio in the range of 150 g/m2 to 200 g/m2.

3. A method according to claim 1 or 2, wherein the deformation of the preform is carried out by blowing.

4. A method according to claim 3, wherein the blowing is performed in two directions, longitudinal and radial directions, so as to obtain a biaxially oriented container.

5. A method according to any one of the preceding claims, wherein it consists in using PET, polyethylene terephthalate.
